# EUROPEAN PATENT SPECIFICATION

(11) **EP 1 578 601 B1**
(45) Date of publication and mention of the grant of the patent: **23.01.2013**
(21) Application number: 02792053.7
(22) Date of filing: 27.12.2002
(51) Int. Cl.: B32B 27/28, B32B 27/32, B32B 7/02

(54) **MULTI-LAYER STRUCTURE WITH POTASSIUM IONOMER**
MEHRSCHICHTIGE STRUKTUR MIT KALIUMIONOMER
STRUCTURE MULTICOUCHES AVE IONOMERE DE POTASSIUM

(43) Date of publication of application: 28.09.2005
(73) Proprietor: Du Pont-Mitsui Polychemicals Co., Ltd., Tokyo 105-7117 (JP)
(72) Inventor: TACHINO, Hitoshi, Ichihara-shi, Chiba 299-0128 (JP); MAKI, Nobuyuki C/o 303, DC-Fort Chiba Chuo, Chiba 260-0021 (JP); NAKANO, Shigenori, Ichihara-shi, Chiba 290-0035 (JP); TAKAHASHI, Kensaku, Koganei-shi, Tokyo 184-0004 (JP); HASHIMOTO, Hidenori, Sodegaura-shi, Chiba 299-0245 (JP)
(74) Representative: Benson, John Everett
(86) International application number: PCT/JP2002/013816
(87) International publication number: WO 2004/060668

(56) References cited:
- WO-A-02/12383
- PATENT ABSTRACTS OF JAPAN vol. 1999, no. 08, 30 June 1999 (1999-06-30) & JP 11 061064 A (SEKISUI CHEM CO LTD), 5 March 1999 (1999-03-05)
- PATENT ABSTRACTS OF JAPAN vol. 1999, no. 11, 30 September 1999 (1999-09-30) & JP 11 147288 A (SUN A KAKEN CO LTD), 2 June 1999 (1999-06-02)

## Description

### Technical Field

The present invention relates to a multi-layer structure (laminate) having at least one layer of potassium ionomer that possesses good charge decay characteristics, slip characteristics, abrasion resistance, etc. In particular, the present invention relates to a multi-layer structure that has good processability, mechanical properties, and dust-free characteristics favorable for molding materials such as for packaging uses.

### Background Art

Olefin polymers are widely utilized in the general packaging film sector. Above all, ethylene polymers are in most common uses owing to their good heat sealability. While good slip characteristics are required in the film production process and good scratch resistance is also required in terms of the performance of the film, few ethylene polymers of general uses possess both of these properties. For instance, even though polyethylene with a wide range of densities acquires sufficient slip characteristics with the addition of slip agents, they do not demonstrate satisfactory scratch resistance. Ionomers of general uses, which inherently have good scratch resistance, are insufficient for slip characteristics.

In general, moldings produced from polymer materials readily generate static electricity and often collect dust from air while they are handled in storage, transit, and end uses, which result in pollution of the surface of moldings. In the case that the molding is a bag for powders and the like, a part of the contained powders sticks to the internal surface of the bag, often defacing the package and impairing the commercial value of the merchandise. To prevent the adhesion of dust and powders, various kinds of anti-static technologies have been proposed and put into practice. Generally adopted approaches include a method to melt-blend an antistatic agent into the molding resin composition and a method to coat the moldings with an antistatic agent or an antistatic polymer. Those methods, however, are known to have some drawbacks. For instance, the former method is often accompanied by contamination of the packaged material with bleed out of the migrated antistatic agents or the problem of time-related deterioration in the antistatic effect. As for the latter method, some defects are pointed out such as poor water resistance of the coated layer, easy damage of the coated layer, increase in surface tackiness resultant from water absorption, etc.

To improve the aforesaid shortcomings of the methods of coating of antistatic agent or antistatic polymer, some attempts have been made by providing some other surface layer on top of an antistatic polymer layer for the purpose of blanketing the antistatic polymer layer. Japanese Patent No. Hei 2 (1990) -28919, for example, proposed an antistatic plastic film comprised of a plastic substrate, an ionic conductive resin layer on it and furthermore, a water-resistant plastic layer having a volume resistivity of 1 x 10¹³ Ω · cm or less and a thickness of 10µm or less on the top of the film. According to this proposal, the type of usable material is limited and therefore, it is difficult to obtain a laminated film having various properties.

Japanese Laid-open Patent Application No. Sho 61(1986)-44646 disclosed an electrostatic and bleed out-free multi-layer structure which has alkali metal salt or amine salt of an ethylene-unsaturated carboxylic acid copolymer in the intermediate layer. Moreover, Japanese Laid-open Patent Application No. Hei 10(1998)-193495 proposed a dust-proof multi-layer structure, which has an intermediate layer composed of a potassium ionomer of ethylene-unsaturated carboxylic acid copolymer and a polyhydroxy compound to improve antistatic effect in low humidity over the aforesaid technique. It disclosed comparative examples that showed antistatic properties were insufficient in those multi-layer structures described in the aforesaid techniques.

The present inventors have engaged in research efforts to obtain a material that has good heat sealability, dust-free characteristics, slip characteristics, scratch resistance, etc. to be suitable for a packaging material, and, as the result, discovered that a specific multi-layer structure gives excellent properties in all of those aspects. The present inventors furthermore discovered that a specific multi-layer structure can provide excellent dust-proof properties without added polyhydroxy compounds, as mentioned in the latter proposal, if an appropriate polymer is selected as the surface layer.

Accordingly, an object of the present invention is to provide a dust-free multi-layer structure which has good dust-free characteristics, slip characteristics, scratch resistance, etc. and is capable of avoiding electrostatic accumulation of dust, powder or the like.

WO-A-02/12383 relates to blends necessarily containing polyoxyethylene sorbitan mono-fatty acid which can bleed out under certain conditions.

The present invention relates to a multi-layer structure which comprises at least three layers including:
an intermediate layer (X) comprising a potassium ionomer of an ethylene-unsaturated carboxylic acid copolymer or a mixture of said potassium ionomer and a thermoplastic polymer other than said potassium ionomer; and
surface layers which consist of a layer (Y) comprising an ethylene copolymer produced by a metallocene catalyst having a surface resistivity of 1 x 10¹⁴ Ω or more, wherein at least one of the surface layers has a 10% charge decay time of 20 sec or less at +5000V applied voltage as determined in atmosphere at a temperature of 23 °C and a relative humidity of 50%, and
wherein a polyhydroxy compound is not added to the intermediate layer (X).

The invention also relates to a sheet or film which comprises the multi-layer structure, the use of a sheet or film for application as packaging, and a bag or multi-layer container which is constructed of the multi-layer structure.

It is preferred that the multi-layer structure comprises at least three layers, wherein (a) the layer (X) occupies the position of the intermediate layer and a surface layer (Z) comprises a polymer material having a surface resistivity of 1 x 10¹⁴ Ω or more, (b) a surface layer (Y) has a 10% charge decay time of 20 sec or less at +5000V applied voltage as determined in atmosphere at a temperature of 23°C and a relative humidity of 50%, and (c) the surface layer (Z), too, has a 10% charge decay time of 20 sec or less at +5000V applied voltage as determined in atmosphere at a temperature of 23°C and a relative humidity 50%.
Multi-layer structures of the aforesaid type are useful for applications involving film, sheet, bags and multi-layer containers.

### Preferred Embodiments of the Invention

The layer (X), which consists of an intermediate layer in the structure of the present invention, comprises a potassium ionomer of ethylene-unsaturated carboxylic acid copolymer or a mixture of such ionomer and a thermoplastic polymer. Although a surface resistivity of the layer (X) is not limited, it ranges preferably 1x10¹² Ω or less, more preferably 1 x 10¹¹ Ω or less, and furthermore preferably 1 x 10¹⁰ Ω or less. As to the potassium ionomer of the layer (X), the ethylene-unsaturated carboxylic acid copolymer employed as its base polymer is produced by copolymerizing ethylene with an unsaturated carboxylic acid and furthermore another polar monomer that is/are optionally chosen.

As unsaturated carboxylic acid, acrylic acid, methacrylic acid, fumaric acid, maleic anhydride, monomethyl maleate, monoethyl maleate, etc. can be exemplified here. Acrylic acid or methacrylic acid is particularly preferable. In addition, as other polar monomers which can be copolymerization components, a vinyl ester such as vinyl acetate, vinyl propionate; an unsaturated carboxylic acid ester such as methyl acrylate, ethyl acrylate, isopropyl acrylate, n-butylacrylate, isobutyl acrylate, n-hexyl acrylate, iso-octyl acrylate, methyl methacrylate, ethyl methacrylate, dimethyl maleate, diethyl maleate; carbon monoxide, etc. are cited. In particular, an unsaturated carboxylic acid ester is a suitable copolymerization component. The above ethylene-unsaturated carboxylic acid copolymer can be obtained by radical copolymerization of ethylene and unsaturated carboxylic acid with other optional polar monomers under high temperature and high pressure.

In cases where the ethylene-unsaturated carboxylic acid copolymer employed as the base polymer of the potassium ionomer has an excessively small acid content or the potassium ionomer has an excessively low degree of neutralization, a multi-layer structure, which has good dust-free characteristics and has the surface layer (Y) with an intended value of a 10% charge decay time at +5000V applied voltage, cannot be obtained. It is, therefore, desirable to employ one type or two or more types of potassium ionomers of ethylene-unsaturated carboxylic acid copolymer, where the unsaturated carboxylic acid content of the base ethylene-unsaturated carboxylic acid copolymer (or the average unsaturated carboxylic acid content of the base ethylene-unsaturated carboxylic acid copolymers) is 10 to 30% by weight, and preferably 10 to 25% by weight, and the degree of neutralization by potassium is 60% or more (60 to 100%), and preferably 70% or more (70 to 100%). With a view to obtaining a multi-layer structure possessing excellent dust-free characteristics in the present invention, it is desirable to employ the mixture of the potassium ionomers of two types or more of ethylene-unsaturated carboxylic acid copolymers varying from each other/one another in the average acid content. An example is mixed ionomers with 60% or more, and preferably 70% or more, neutralization by potassium ion of the ethylene-unsaturated carboxylic acid copolymers varying from each other/one another in the acid content; namely, the difference between the highest content and the lowest content, by 1% by weight or more, and preferably 2 to 20% by weight, while such two or more types of copolymers have an average acid content of 10 to 30% by weight, and preferably 10 to 20% by weight. More specifically, particularly favorable is mixed ionomers with the aforesaid degree of neutralization (60% or more) for the mixed copolymers components that has an average unsaturated carboxylic acid content of 10 to 30% by weight, and preferably 10 to 20% by weight and an average melt flow rate of 1 to 300 g/10 min, more preferably 10 to 200 g/10 min, and furthermore preferably 20 to 150 g/10 min as determined at a temperature of 190°C and under a load of 2,160 g. This mixed ionomers preferably comprises ionomers of mixtures of an ethylene-unsaturated carboxylic acid copolymer having an unsaturated carboxylic acid content of 1 to 10% by weight, and preferably 2 to 10% by weight and a melt flow rate of 1 to 600 g/10 min and preferably 10 to 500 g/10 min as determined at a temperature of 190°C and under a load of 2,160 g (the copolymer (A-1)) and an ethylene-unsaturated carboxylic acid copolymer having an unsaturated carboxylic acid content of 11 to 25% by weight, and preferably 13 to 23% by weight and a melt flow rate of 1 to 600 g/10 min, and preferably 10 to 500 g/10 min as determined at a temperature of 190°C and under a load of 2,160 g (the copolymer (A-2)). It is preferable that the mixed polymer composition as the base polymer of the mixed ionomers is prepared by blending the copolymers A-1 and A-2 in the ratio of 5 to 80 parts by weight, and preferably 10 to 70 parts by weight for A-1, and 95 to 20 parts by weight, and preferably 90 to 30 parts by weight for A-2.

The ethylene-unsaturated carboxylic acid copolymer, as a base polymer of the potass ium ionomer, may contain another polar monomer as has already been mentioned by, for instance, 40% by weight or less. In case that the layer (X) is employed as the surface layer, a polar monomer content of the copolymer has to be 30% by weight or less; and preferably 15% by weight or less, because the presence of an excessive amount of polar monomer in the copolymer exerts an adverse effect on slip characteristics and scratch resistance.

It is also desirable to employ a potassium ionomer which has a melt flow rate of 0.1 to 100 g/100 min, and particularly 0.2 to 50 g/10 min as determined at a temperature of 190°C and under a load of 2,160 g in consideration of its intended processability, scratch resistance, or miscibility in case another component is blended.

For the multi-layer structure of the present invention, the aforesaid potassium ionomer is used as the intermediate layer. Such layer (X) may be a potassium ionomer by itself, but another thermoplastic polymer may be blended to the extent that the antistatic properties, slip characteristics and scratch resistance of the structure are not greatly impaired. Such thermoplastic polymer may be selected from polymer materials usable as the surface layer (Y) that are described later. It is preferable to use olefin-based polymers, especially ethylene-based polymers selected from ethylene homopolymers, copolymers produced from ethylene and an alpha-olefin having 3 or more carbon atoms, copolymers produced from ethylene and vinyl acetate or an unsaturated carboxylic acid ester, etc. It is not a requisite condition to employ virgin resin for such ethylene-based polymers. For instance, in cases where an ethylene-based polymer is used for the surface layer, reject products and scrap materials such as trimmed edges produced in the plastic molding operation may be recycled. Preferred blending ratio of thermoplastic polymer are 95% by weight or less, preferably 90% by weight or less, and particularly preferably 60% by weight or less as compared with the total amount of the potassium ionomer layer (X). In other words, it is desirable that the potassium ionomer accounts for 5% by weight or more, preferably 10% by weight or more, and particularly preferably 40% by weight or more of the potassium ionomer layer (X) as a whole.

In the multi-layer structure of the present invention, polymer materials (excluding the same resin or resin composition as that of layer (x)) having surface resistivity of not less than 1 × 10¹⁴ Ω is used for one surface layer (Y). Surface resistivity of the polymer materials in the present invention is measured at 23°C under an atmosphere of 50% relative humidity.

The polymer materials of the layer (Y) in the present invention are such materials that when they are molded singly, the moldings show not less than 1 × 10¹⁴ Ω of surface resistivity. As examples of such polymer materials, there can be cited olefin-based polymers such as homopolymers of ethylene or copolymers of ethylene and alpha-olefin having 3 to 12 carbon atoms such as high pressure polyethylene, middle or high density polyethylene, linear low density polyethylene, especially linear low density polyethylene having density of not more than 940kg/m³, and ultra low density polyethylene; polypropylene; poly-1-butene; poly-4-methyl-1-pentene; copolymers of ethylene and polar monomer such as ethylene-vinyl acetate copolymer; copolymers of ethylene and unsaturated carboxylic acid such as acrylic acid, methacrylic acid, monoethyl maleate and maleic anhydride; or ionomers thereof such as Na, Li, Zn, Mg or Ca ionomer; copolymers of ethylene and one or more kinds of unsaturated carboxylic acid ester such as methyl acrylate, ethyl acrylate, isobutyl acrylate, n-butyl acrylate, 2-ethyl hexyl acrylate, methyl methacrylate, glycidyl methacrylate and dimethyl maleate; terpolymers of ethylene, the above unsaturated carboxylic acid and unsaturated carboxylic acid ester, or ionomers thereof such as Na, Li, Zn, Mg or Ca ionomer; copolymers of ethylene, carbon monoxide and optional unsaturated carboxylic acid ester and vinyl acetate; and polyolefin-based elastomer; styrene-based polymers such as polystyrene and rubber-reinforced styrene-based resins like high impact polystyrene and ABS resin; polyesters such as polyethylene terephthalate, polytrimethylene terephthalate, polytetramethylene terephthalate, polyethylene naphthalate, polyethylene telephthalate copolymerized with cyclohaxane-dimethanol and polyester elastomer; poly carbonates; and poly methyl methacrylate, or mixtures of not less than two kinds of these.

Among those polymer materials it is preferable to employ the olefin-based polymers which give good sealability, particularly ethylene homopolymer, a copolymer produced from ethylene and an alpha-olefin having 3 or more carbon atoms, such as linear low density polyethylene, a copolymer produced from ethylene and a polar monomer, etc. In particular, it is preferable to use such material as selected from zinc ionomer and ethylene-based polymers produced using metallocene catalyst, since the multi-layer structure using these materials provide excellent heat sealability and the surface layer (Y) capable of giving good dust-free characteristics even though a polyhydroxy compound is not added in the layer (X).

The zinc ionomer is produced by partially neutralizing the ethylene-unsaturated carboxylic acid copolymer with zinc ion, in which another polar monomer may optionally be copolymerized and it may have another metal ion coexisting with zinc.

Herein, as unsaturated carboxylic acid, acrylic acid, methacrylic acid, fumaric acid, maleic anhydride, monomethyl maleate, monoethyl maleate are exemplified, and particularly acrylic acid or methacrylic acid is preferable. In addition, as other polar monomers which can be copolymerization components, vinyl ester such as vinyl acetate and vinyl propionate; unsaturated carboxylic acid ester such as methyl acrylate, ethyl acrylate, isopropyl acrylate, n-butyl acrylate, isobutyl acrylate, n-hexyl acrylate, iso-octyl acrylate, methyl methacrylate, dimethyl maleate and diethyl maleate acid; and carbon monoxide are cited. Particularly an unsaturated carboxylic acid ester is a suitable copolymerization component.

The ethylene-unsaturated carboxylic acid copolymer which is employed as the base polymer of the zinc ionomer preferably has an unsaturated carboxylic acid content of 1 to 25% by weight, and particularly 5 to 20% by weight, while the polar monomer which may optionally be copolymerized is to be contained by, for example, 40% by weight or less, and preferably 30% by weight or less. Preferred for the zinc ionomer is one that has a degree of neutralization of 10 to 90%, and particularly 15 to 80%. Moreover, in consideration of the intended processability and practicable physical properties, it is preferable to employ a zinc ionomer having a melt flow rate of 0.1 to 100 g/10 min, and particularly 0.2 to 50 g/10 min as determined at a temperature of 190°C and under a load of 2,160 g.

The ethylene-based polymer manufactured in the presence of metallocene catalyst which is favorably employed as a polymer material of the surface layer (Y) is to be ethylene homopolymer or a copolymer produced by copolymerizing ethylene with an alpha-olefin having 3 or more carbon atoms, and preferably 3 to 12 carbon atoms, which is produced by polymerizing or copolymerizing ethylene in the presence of a catalyst formulated from a catalyst component comprised of a compound of a Group IVB transition metal, preferably zirconium, having at least one or more ligands of the cyclopentadienyl structure, and an organoaluminum-oxy compound catalyst component and, if necessary, various additive components.

As the alpha-olefin having not less than 3 carbon atoms in the above ethylene copolymer, propylene, 1-butene, 1-pentene, 1-hexene, 1-octene, 1-decene, 1-dodecen and 4-methyl-1-pentene can be exemplified. Particularly copolymer of alpha-olefin having around 3 to 12 carbon atoms is preferably used.

Although there can be employed as the ethylene polymer or copolymer manufactured in the presence of metallocene catalyst those materials which have varied density values in accordance with the alpha-olefin content of the copolymer, it is generally desirable to employ an ethylene copolymer having a density of 870 to 970 kg/m³ particularly 890 to 950 kg/m³, and more particularly 900 to 940 kg/cm. In the light of the intended processability and practical physical properties, it is preferable to employ one that has a melt flow rate of 0.1 to 100 g/10 min, particularly 0.2 to 50 g/10 min as determined at a temperature of 190°C and under a load of 2,160 g.

The multi-layer structure of the present invention may be constructed of three or more layers with the layer (Y) consisting of one surface layer and the layer (X) consisting of an intermediate layer. In this case, the surface layer (Z) other than the layer (Y) can be a polymer material (excluding the same resin or resin composition as that of layer (X)) having a surface resistivity of 1 x 10¹⁴ Ω or more, which is comparable with the layer (Y). Even in this case, another thermoplastic polymer or an adhesive layer may be provided between the layer (Y) and the layer (X) or between the layer (X) and the layer (Z). The polymer materials exemplified as for the layer (Y) can be cited as examples of the thermoplastic polymer layer. This layer may also be a layer of recycled resin produced from retrieved reject products, trimmed edges, etc. which are generated in the multi-layer structure production. Such materials for the recycled resin layer are expected to contribute the enhancement of the interlayer adhesion, because they are basically the same as the polymer material for either surface layer, for the intermediate layer or a mixture of the two, and hence enjoy good miscibility with at least one of the surface layers and the intermediate layer.

What is usable as the adhesive layer that will serve the aforesaid purpose is any type as far as it improves the interlayer bond strength. It may be selected from those thermoplastic polymers already exemplified as the raw materials for the surface layer, or may be hot melt-type adhesives or coating-type adhesives. It is preferable from the industrial standpoint to use an adhesive, applicable to the extrusion coating process, which is selected from thermoplastics or formulations including a thermoplastic polymer blended with tackifier.

A preferred embodiment of the present invention is a three-layer structure comprised of the layer (X), the intermediate layer, and the layer (Y), wherein (a) the first surface layer (X) is a layer comprising a potassium ionomer of ethylene-unsaturated carboxylic acid copolymer, (b) the intermediate layer comprises either a linear low density polyethylene layer or a layer of a mixture made of 100 parts by weight of linear low density polyethylene and 100 parts by weight or less, preferably 50 part by weight or less of a potassium ionomer of ethylene-unsaturated carboxylic acid copolymer, and (c) the other surface layer (Y) comprises a linear low density polyethylene layer. The linear low density polyethylene has a density of typically 940 kg/m³ or less. An ethylene-based polymer produced particularly by metallocene catalyst is preferred as a polymer material for the intermediate layer and the other surface layer. The thickness ratio of the aforesaid layers are preferably 10 to 90 for the first surface layer (X), 0 to 60 for the intermediate layer and 10 to 90 for the other surface layer (Y).

Still another preferred embodiment of the present invention is a three-layer structure comprising the outer layer (Y), the intermediate layer (X), and the inner layer (Z) or of the outer layer (Z), the intermediate layer (X), and the inner layer (Y), wherein the outer layer (Y) and the inner layer (Z) (or the outer layer (Z) and the inner layer (Y)) comprise polyethylene such as low density polyethylene, medium density polyethylene, high density polyethylene, etc. or an ethylene-unsaturated ester copolymer such as ethylene-vinyl acetate copolymer, and the intermediate layer (X) is a layer comprising a potassium ionomer of ethylene-unsaturated carboxylic acid copolymer. Multi-layer blow-molded bottles (containers) produced by the blow molding process from this multi-layer structure demonstrate good dust-free characteristics, slip characteristics, scratch resistance, etc.

The multi-layer structure of the present invention can be manufactured by the extrusion coating process, the coextrusion process or the blow molding process. While overall layer thickness of the multi-layer structure may be optionally settled, it is preferable that the thickness is in the range of 10 to 3,000 µm, particularly 20 to 1,000 µm. In the structure of the present invention, at least one of the surface layers has a 10% charge decay time (time to reach +500V) at +5000V applied voltage as determined in atmosphere at a temperature of 23°C and a relative humidity of 50% of 20 sec or less, and preferably 10 sec or less, and more preferably 1 sec or less. In cases where the layer (X) is the intermediate layer and the layer (Z) is another surface layer, it is permissible that the charge decay time of the layer (Z) exceeds 20 sec as far as the decay time of the layer (Y) is 20 sec or less. Nevertheless, it is preferable that the charge decay time of the layer (Z), too, is 20 sec or less, preferably 10 sec or less, and more preferably 1 sec or less. In order to achieve said values, it is preferable that the thickness of the surface layer (Z) or the combined thickness of the surface layer (Z) and a recycled resin layer or an adhesive layer, if the latter is incorporated, is at 500 µm or less, and particularly 300 µm or less. It is preferable in the light of practical capabilities that the thickness ratio of the total thickness of the other layers to the thickness of the potassium ionomer layer is within the range of 0.1 to 100, particularly 0.5 to 50.

Various additives can be blended as required with each layer of the multi-layer structure of the present invention. As examples of such additives, antioxidants, light stabilizers, ultraviolet absorption agents, pigments, dyestuffs, lubricants, anti-blocking agents, inorganic fillers, foaming agents and foaming promoters can be cited. Especially for a multi-layer bottle whose outer layer is layer (X), the multi-layer bottle in which a foaming agent is blended with the layer (X) and foamed became a bottle having superior visual quality with a silky appearance. Such a multi-layer bottle can be obtained by foaming in blow molding, after blending around 0.1 to 10 parts by weight of organic or inorganic chemical foaming agent such as azodicarbonamide, dinitrosopentamethylenediamine, sulfonylhydrazide, sodium bicarbonate or ammonium bicarbonate per 100 parts by weight of the above potassium ionomer.

### [Examples]

Further concrete explanation of the present invention is given below with examples, but the present invention is not limited to these examples. In addition, the materials used and performance evaluation methods of the multi-layer structure obtained in the following examples and comparative examples are shown below.

### 1. Materials

### [Polymer materials]

Polymer materials described in Table 1 were used.

### [Potassium ionomer]

Potassium ionomers described in Table 3, in which their raw materials are base polymers of Table 2, were used.

**Table 1**

| Abb. | Polymer Material | Maker | Brand Name | MFR* g/10min | Density kg/m³ | Surface Resistivity Ω | Note |
|---|---|---|---|---|---|---|---|
| MPE-1 | Metallocene LLDPE | MCI | Evolue SP1540 | 4.0 | 915 | 10¹⁴< | |
| MPE-2 | Metallocene LLDPE | MCI | Evolue SP2040 | 4.0 | 920 | 10¹⁴< | |
| PE-1 | LDPE | MCI | Mirason M401 | 1.6 | 923 | 6 × 10¹⁵ | |
| PE-2 | HDPE | MCI | Hi-zex 6200B | 0.36 | 956 | 6 x 10¹⁵ | |
| PE-3 | LDPE | MCI | Mirason 16 | 3.7 | 923 | 6 x 10¹⁵ | |
| EVA-1 | Ethylene-Vinyl Acetate Copolymer | MDP | Evaflex P1905 | 2.5 | 940 | 2 x 10¹⁵ | VA Content 19 wt% |
| EVA-2 | Ethylene-Vinyl Acetate Copolymer | MDP | Evaflex P1403 | 1.3 | 930 | 6 x 10¹⁵ | VA Content 14 wt% |
| EVA-3 | Ethylene-Vinyl Acetate Copolymer | MDP | Evaflex EV5274 | 0.8 | 940 | 2 x 10¹⁵ | VA Content 17 wt% |
| EVA-4 | Ethylene-Vinyl Acetate Copolymer | MDP | Evaflex EV250 | 15 | 950 | 9 x 10¹³ | VA Content 28 wt% |
| HM-1 | Ethylene-Methacrylic Acid Copolymer Ionomer | MDP | Himilan 1554 | 1.0 | 940 | 2 x 10¹⁷ | Zinc Salt |
| HM-2 | Ethylene-Methacrylic Acid Copolymer Ionomer | MDP | Himilan 1706 | 0.7 | 970 | 2 x 10¹⁷ | Zinc Salt |

| | | | | | | | |
|---|---|---|---|---|---|---|---|
| LLDPE: Linear Low Density Polyethylene, LDPE: Low Density Polyethylene HDPE: High Density Polyethylene, VA: Vinyl Acetate MCI: MITSUI CHEMICALS, INC. MDP: DU PONT-MITSUI POLYCHEMICALS CO., LTD. *: Melt Flow Rate under the Load of 2160g at 190°C | | | | | | | |

**Table 2**

| Abb. | Base Polymer | Methacrylic Acid Content wt% | Isobutyl Acrylate Content wt% | MFR* g/10min |
|---|---|---|---|---|
| EMAA-1 | Ethylene-Metharylic Acid Copolymer | 15 | 0 | 60 |
| EMAA-2 | Ethylene-Metharylic Acid Copolymer | 10 | 0 | 100 |
| EMAA-3 | Ethylene-Metharylic Acid Copolymer | 17.5 | 0 | 60 |
| EMAAIBA | Ethylene-Metharylic Acid-Isobutyl Acrylate Copolymer | 5 | 10 | 33 |

| | | | | |
|---|---|---|---|---|
| *: Melt Flow Rate under the Load of 2160g at 190°C | | | | |

**Table 3**

| Abb. | Properties of Base Polymer | | | Properties of K-Ionomer | | Added Polyhydroxy Cpd. Wt% |
|---|---|---|---|---|---|---|
| | Composition (weight) | Average Acid Content wt% | Av. MFR* g/10min | Neutralization Degrees % | MFR* g/10min | |
| KIO-1 | Blend of EMAA-1(50) and EMAA-2(50) | 12.5 | 78 | 92 | 5.0 | PEG600 10 |
| KIO-2 | Blend of EMAA-3(50) and EMAAIBA(50) | 11.3 | 45 | 80 | 0.6 | 0 |
| KIO-3 | Blend of EMAA-1(50) and EMAA-2(50) | 12.5 | 78 | 92 | 0.2 | 0 |
| KIO-4 | Blend of EMAA-1(50) and EMAA-2(50) | 12.5 | 78 | 80 | 5.5 | Glycerin 9 |
| KIO-5 | Blend of EMAA-3(50) and EMAAIBA(50) | 11.3 | 45 | 80 | 0.6 | Glycerin 0.5 |

| | | | | | | |
|---|---|---|---|---|---|---|
| PEG600: Polyethylene Glycol (MW:600) *: Melt Flow Rate under the Load of 2160g at 190°C | | | | | | |

### 2. Physical property test methods

### (1) Antistatic performance

### (1-1) Decay time

After a piece of the sample film was kept at 23°C and 50% relative humidity for 24 hours, time from +5000V of applied voltage to +500V as 10% charge decay time and time from +5000V of applied voltage to +2500V as 50% charge decay time of the sample film were measured using a Static Decay Meter Model 4060 of ETS Inc.

### (1-2) Ash attachment test method

Immediately after a piece of the sample film was kept at 23°C and 50% relative humidity for 24 hours, the sample film was rubbed 10 times with a sheet of cotton cloth, ash for one cigarette was put on it and then the sample film was reversed. The ash adhesion was determined with remaining status of ash.
⊚ :Ash is not remaining at all
○ :Ash is slightly remaining
Δ : Ash is sparsely remaining
× :Ash is almost remaining on the entire surface

### (1-3) The electric potential measurement

A multi-layer container was kept at 40°C and 80% relative humidity for 24 hours and the electric potential on the surface was measured using a static electricity detector (model SV-511 of Static Co., Ltd.)

### (1-4) Attachment of shavings of dry bonito

After a multi-layer container was kept at 40°C and 80% relative humidity for 24 hours, the surface was rubbed 10 times with cotton cloth, shavings of dried bonito were brought near the container and their attachment state was observed.
○: not attached at all
Δ: attached to some extent
×: attached promptly

### (2) Slip performance

### (2-1) Coefficient of friction (Inclination angle method)

A sample film or a cardboard to be measured was put on a base plate surface. The same sample film was stuck on a lower part of load to be contacted with the base plate, and the base plate was inclined. The coefficient of friction was calculated from an angle at the time that the load started sliding.

### (3) Scratch-proof Ability

### (3-1) Reciprocating Sliding Abrasion

Using a sheet of cotton canvas No. 10, under a condition of 430 g of load, 224 m² of contact area, 60 times/min of reciprocating speed and 100 times of reciprocating, the surface of a laminate was scratched and a ratio of shaved surface area was determined with a microscope photograph (35 times, observed 2mm wide).
⊚ :shaved part of less than 5%
○ :shaved part of 5% to less than 25%
Δ :shaved part of 25% to less than 50%
× : shaved part of 50 % or more

### [Example 1]

Using multi-layer cast film machine, a multi-layer film having the first layer (the surface layer) made of MPE-2, the second layer (a middle layer) made of KIO-2 and the third layer (the surface layer) made of MPE-2, and having a thickness of each layer described in Table 4 was prepared. The thickness ratio of the first layer to the second layer of this multi-layer structure (Layer Thickness Ratio) was 0.75. The evaluation result of the first layer surface of multi-layer film obtained is shown in Table4.

### [Example 2]

Using adhesive polyolefin Admer (trade name) NF528528 (MFR 2. 2 g/10min), produced by Mitsui chemicals Inc., as adhesive layers between the first layer made of MPE-2 and the second layer made of KIO-2, and between the second layer made of KIO-2 and the third layer made of MPE-2, a multi-layer film was prepared in the same manner as Example 1 except thickness ratio of each layer was changed as described in Table 4. The layer thickness ratio of a sum of the first layer thickness and the upper adhesive layer thickness to the second layer thickness, and the evaluation result of the antistatic performance of the first layer surface are shown in Table 4.

### [Example 3]

A multi-layer film was prepared in the same manner as Example 2 except the first layer and the third layer were changed from MPE-2 to MPE-1 and thickness of each layer was changed as described in Table 4. The layer thickness ratio and the evaluation result of antistatic performance of the first layer surface are shown Table 4.

### [Examples 4 and 5], not according to the invention

A multi-layer film was prepared in the same manner as Example 1 except use of HM-1 as the first layer, use of melt blend of EVA-1 and KIO-1 (weight ratio 80/20) as the second layer, use of EVA-2 as the third layer, and thickness of each layer was changed as described in Table 4. The layer thickness ratio and the evaluation result of the antistatic performance of the first layer surface are shown in Table 4.

### [Comparative Example 1]

Using multi-layer cast film machine, a monolayer film of MPE-2 (50 µm thickness) was prepared by changing each layer to MPE-2. The antistatic performance of the surface of the monolayer film obtained was completely insufficient as shown in Table 4.

### [Comparative Example 2]

A multi-layer film was prepared in the same manner as Example 3 except the second layer was changed from KIO-2 to HM-2. The antistatic performance of the first layer surface of the multi-layer film obtained was completely insufficient as shown in Table 4.

**Table 4**

| | | Examples | | | | | Comp. Examples | |
|---|---|---|---|---|---|---|---|---|
| | | 1 * | 2 | 3 | 4 * | 5 * | 1 | 2 |
| Structure and Thickness of Multi-layer films (µm) | 1st Layer | MPE-2 (15) | MPE-2 (10) | MPE-1 (20) | HM-1 (50) | HM-1 (200) | MPE-2 (50) | MPE-1 (20) |
| | Ad. Layer | - | NF528 (5) | NF528 (20) | - | - | - | NF528 (20) |
| | 2nd Layer | KIO-2 (20) | KIO-2 (20) | KIO-2 (40) | EVA-1+KIO-1 (40) | EVA-1+KIO-1 (40) | - | HM-2 (40) |
| | Ad. Layer | - | NF528 (5) | NF528 (20) | - | - | - | NF528 (20) |
| | 3rd Layer | MPE-2 (15) | MPE-2 (10) | MPE-1 (20) | EVA-2 (40) | EVA-2 (40) | - | MPE-1 (20) |
| Layer Thickness Ratio⁽¹⁾ | | 0.75 | 0.75 | 1.0 | 1.25 | 5.0 | - | 1.0 |
| Evaluation of 1st Layer Surface | | | | | | | | |
| 10% Charge Decay Time (sec) | | 0.01 | 10 | 0.79 | 0.02 | 0.02 | 60< | 60< |
| 50% Charge Decay Time (sec) | | - | 0.01 | 0.04 | 0.01 | - | - | - |
| Cigarette Ash Test | | ⊚ | ⊚ | ○ | ⊚ | ○ | × | × |

| | | | | | | | | |
|---|---|---|---|---|---|---|---|---|
| (1) Layer Thickness Ratio: (1st layer + Upper Ad. Layer) / 2nd Layer * not according to the invention | | | | | | | | |

### [Examples 6 to 10, Comparative Example 3], not according to the invention

Using a blow-molding machine, a three-layer container was prepared with the layer structure shown in Table 5, 0.5 mm of thickness of each layer and 100 ml of inside volume. The evaluation result of outer layer surface of the container is shown together in Table 5.

**Table 5**

| | Examples | | | | | Com. Example |
|---|---|---|---|---|---|---|
| | 6 * | 7 * | 8 * | 9 * | 10 * | 3 |
| Layer Structure | | | | | | |
| Outer Layer | EVA-3 | PE-1 | EVA-3 | PE-2 | PE-2 | PE-1 |
| Middle Layer | KIO-2 | KIO-2 | Blend* of KIO-2 (70) and PE-1(30) | Blend* of KIO-3 (70) and PE-2(30) | Blend* of KIO-4 (20) and PE-2(80) | PE-1 |
| Inner Layer | PE-1 | PE-1 | PE-1 | PE-2 | PE-2 | PE-1 |
| Evaluation of Outer Layer Surface | | | | | | |
| Voltage(kV) | 1 | 12 | 3 | 11 | 10 | 18 |
| 10% Charge Decay Time (sec) | 0.03 | 15 | 0.27 | 11 | 3 | No Decay |
| 50% Charge Decay Time (sec) | 0.01 | 0.15 | 0.04 | 0.12 | 0.07 | Immeasurable |
| Dry Bonito Shavings Test | ○ | Δ | ○ | Δ | ○ | × |

| | | | | | | |
|---|---|---|---|---|---|---|
| *: Blend Ratio (by weight) * not according to the invention | | | | | | |

### [Example 11], not according to the invention.

Using a multi-layer cast film machine, a multi-layer film having the first layer (surface layer) made of KIO-2, the second layer (surface layer) made of MPE-1 and an adhesive layer made of adhesive polyolefin produced by Mitsui Chemicals Inc., Admer (trade name) NF528 (MFR 2. 2 g/10min) was prepared. Thickness structure of each layer is described in Table 6. The ratio of a sum of the second layer thickness and adhesive layer thickness to thickness of the first layer of this multi-layer structure (Layer Thickness Ratio) was 1.5. The evaluation results of the first layer surface and the second layer surface of the multi-layer film obtained are shown in Table 6.

### [Example 12], not according to the invention.

A multi-layer film was prepared in the same manner as Example 11 except KIO-2 of the first layer was changed to KIO-5. The layer thickness ratio of the multi-layer film obtained and the evaluation result of the antistatic performance of the first layer surface and the second layer surface of the film are shown in Table 6.

### [Example 13], not according to the invention

A multi-layer film was prepared in the same manner as Example 11 except MPE-1 of second layer was changed to EVA-2 and thickness of each layer was changed as described in Table 6 without adhesive layer. The layer thickness ratio of the multi-layer film obtained and the evaluation result of the antistatic performance of the first layer surface and the second layer surface of the film are shown in Table 6.

### [Comparative Example 4]

A multi-layer film was prepared in the same manner as Example 11 except KIO-2 of the first layer was changed to HM-2 and thickness of each layer was changed as described in Table 6. The antistatic performance of the surface of the first layer and the second layer of the multi-layer film obtained, and the coefficient of friction of the surface of the first layer were completely insufficient as shown in Table 6.

### [Comparative Example 5]

A monolayer film (thickness 40 µm) of MPE-1 was prepared by changing each layer to MPE-1. The antistatic performance, coefficient of friction and abrasion resistance were completely insufficient as shown in Table 6.

**Table 6**

| | | | Examples | | | Comparative Examples | |
|---|---|---|---|---|---|---|---|
| | | | 11 * | 12 * | 13 * | 4 | 5 |
| Constitution and Thickness of Multi-layer Films | | 1st Layer | KIO-2 (40) | KIO-5 (40) | KIO-2 (50) | HM-2 (40) | MPE-1 (40) |
| | | Ad. Layer | NF528 (20) | NF528 (20) | - | NF528 (20) | - |
| (µm) | | 2nd Layer | MPE-1 (40) | MPE-1 (40) | EVA-2 (50) | MPE-1 (40) | - |
| Layer Thickness Ratio⁽¹⁾ | | | 1.5 | 1.5 | 1.0 | 1.0 | - |
| Evaluation of 1st Layer Surface | | | | | | | |
| 10% Charge Decay Time (sec) | | | 0.01 | 0.01 | 0.01 | - | 60< |
| 50% Charge Decay Time (sec) | | | 0.01 | - | - | 60< | - |
| Cigarette Ash Test | | | ⊚ | ⊚ | ⊚ | × | × |
| Coefficient of Sliding Friction | Among Films | | 0.53 | 0.60 | 0.53 | 2.4< | 2.4< |
| | To Cardboard | | 0.51 | 0.55 | 0.51 | 0.85 | 0.87 |
| Reciprocating Sliding Abrasion | | | Δ | Δ | Δ | ⊚ | × |
| Evaluation of 2nd Layer Surface | | | | | | | |
| 10% Charge Decay Time (sec) | | | 0.43 | 0.01 | 0.01 | - | 60< |
| 50% Charge Decay Time (sec) | | | 0.01 | - | - | 60< | - |
| Cigarette Ash Test | | | ⊚ | ⊚ | ⊚ | × | × |

| | | | | | | | |
|---|---|---|---|---|---|---|---|
| (1) Layer Thickness Ratio: (2nd layer + Ad. Layer) / 1st Layer * not according to the invention | | | | | | | |

### [Example 14], not according to the invention

A three-layer container with the layer structure shown in Table 7, 0.5 mm of thickness of each layer and 100 ml of inside volume was prepared using a blow-molding machine. The surface reflected gloss (in accordance with JIS Z8741) of this multi-layer container was 0.5%, the haze (in accordance with JIS K6714) was 65%, and the flexural modulus (in accordance with JIS K7106) was 147 MPa. The evaluation result of the antistatic performance is shown in Table 7.

### [Examples 15 to 17, Comparative Example 6], not according to the invention

A three-layer container was prepared in the same manner as Example 14 except the layer structure was described in Table 7. The evaluation result of the antistatic performance is shown in Table 7.

**Table 7**

| | Examples | | | | Com. Ex. |
|---|---|---|---|---|---|
| | 14 * | 15 * | 16 * | 17 * | 6 |
| Layer Structure | | | | | |
| Outer Layer | KIO-2 | Blend* of KIO-3 (80) and PE-2(20) | PE-2 | Blend* of KIO-4(20) and PE-2(80) | PE-3 |
| Middle Layer | EVA-4 | PE-2 | PE-2 | PE-2 | PE-3 |
| Inner Layer | PE-3 | PE-2 | Blend of KIO-3(90) and PE-2(10) | PE-2 | PE-3 |
| Evaluation of Outer Layer Surface | | | | | |
| Voltage (kV) | 1 | 3 | 2 | 0 | 18 |
| Dry Bonito Shaving Test | ○ | ○ | ○ | ○ | × |

| | | | | | |
|---|---|---|---|---|---|
| *: Blend Ratio (by weight) * not according to the invention | | | | | |

### Industrial Applicability

According to the present invention, a multi-layer structure which has good charge decay characteristics and dust-free characteristics to be able to prevent from adhesion of dust and powders due to static charge buildup can be provided. Moreover, a multi-layer structure having good slip characteristics and scratch resistance can be provided. Such structure is capable of serving various needs, for example, in the form of film, tape, sheet, tube, pipe, bag, multi-layer container (such as blow-molded container), rod, injection moldings, blow-molded articles, etc. This material is favorably employed especially for packaging materials. Bags or multi-layer containers which have the potassium ionomer layer (X) for their inner surface can be utilized as packaging materials whose inner surface possesses good ability to protect the packaged material from wear, slip characteristics and heat sealability, on top of the dust-free characteristics of their outer surface. Moreover such moldings having the potassium ionomer layer (X) for their intermediate layer and the surface layer (Y) possessing the aforesaid charge decay characteristics for their outer surface are found to have significant dust-free characteristics and be able to be avoid dust accumulation on the surface. And, where it is put in use as the material for packaging powders in such a manner that the surface layer (Y) having the aforesaid charge decay characteristics serves as the inner surface material, static adhesion of powder to the package does not take place, and hence the commercial value of such commodity is maintained. The outer surface of the multi-layer blow-molded containers constructed of the multi-layer structure of the present invention that incorporates the potassium ionomer layer for the intermediate layer exhibits good slip characteristics, scratch resistance and dust-free characteristics.

The multi-layer structure of the present invention can be utilized for the following applications in addition to the packaging material use. Namely, semiconductor-use adhesive tape or film such as dicing tape's substrate, back grinding film; materials utilized in the electric and electronic industries, such as marking film, IC carrier tape, electronic component taping; food wrapping material; sanitary supplies; surface protection film (i. e. guard film or tape for glass, plastic or metal board, and lens); steel wire sheathing or coating; clean room curtains, wall paper, mat, flooring, flexible container lining, container, shoes, battery separators, moisture permeable film, dust-free film, dust-proof film, substitute for PVC film; tubes and bottles to package cosmetics, detergents, shampoo, hair rinse, auto exterior or interior materials, etc.

The multi-layer structure of the present invention can be put into service after it has been provided with an adhesive layer on one side or the both sides of its surface layer. Examples of such adhesive layer are rubber-based, acrylic and silicone adhesive layers. The multi-layer structure of the present invention, moreover, can be utilized in the form of being laminated onto such substrate as biaxially oriented film or sheet produced from polyethyleneterephthalate, polyamide, and polypropylene, or items including sheet-form articles molded from acrylic resin, polycarbonate, ABS resin, styrene-based resin like polystyrene and polyacetal. In cases where the material is utilized as the surface material endowed with dust-free characteristic, the multi-layer structure of the present invention is laminated in a way that the layer (Y), the layer (X) or the layer (Z) contacts the aforesaid substrate face-to-face or laid over the substrate with an adhesive layer interposed in between. Examples of the substrate employed for the aforesaid applications can be monolayer or multi-layer materials produced from various plastics, paper, wood, metal foil and sheet, foams, woven fabric and nonwoven fabric.

## Claims

1. A multi-layer structure which comprises at least three layers including:
an intermediate layer (X) comprising a potassium ionomer of an ethylene-unsaturated carboxylic acid copolymer or a mixture of said potassium ionomer and a thermoplastic polymer other than said potassium ionomer; and
surface layers which consist of a layer (Y) comprising an ethylene copolymer produced by a metallocene catalyst having a surface resistivity of 1 x 10¹⁴ Ω or more, wherein at least one of the surface layers has a 10% charge decay time of 20 sec or less at +5000V applied voltage as determined in atmosphere at a temperature of 23 °C and a relative humidity of 50%, and
wherein a polyhydroxy compound is not added to the intermediate layer (X).

2. A multi-layer structure according to claim 1, wherein the ethylene copolymer produced by a metallocene catalyst has a density of 870 to 970 kg/m³.

3. A multi-layer structure according to claim 1, wherein the ethylene copolymer is produced by copolymerizing ethylene with an alpha-olefin having 3 or more carbon atoms in the presence of a catalyst formulated from a catalyst component comprising a compound of a Group IVB transition metal having at least one or more ligands of a cyclopentadienyl structure, and an organoaluminum-oxy compound catalyst component.

4. A multi-layer structure according to any one of claims 1 to 3, wherein the potassium ionomer comprises an ionomer of the ethylene-unsaturated carboxylic acid copolymer whose unsaturated carboxylic acid content is 10 to 30% by weight, having a neutralization degree of 60% or more by potassium ion.

5. A multi-layer structure according to claim 4, wherein the potassium ionomer is mixed ionomers of two or more ethylene-unsaturated carboxylic acid polymers varying in the unsaturated carboxylic acid content, the average acid content of the ethylene-unsaturated carboxylic acid copolymers being 10 to 20% by weight and the difference in the acid content between the highest and the lowest acid contents being 2 to 20% by weight.

6. A multi-layer structure according to claim 5, wherein the potassium ionomer is mixed ionomers of mixed copolymer composition, having an average unsaturated carboxylic acid content of 10 to 30% by weight and average melt flow rate of 1 to 300 g/10 min as determined at a temperature of 190 °C and under a load of 2,160 g, and has a degree of neutralization of 60% or more, which comprises an ethylene-unsaturated carboxylic acid copolymer (copolymer (A-1)) having an unsaturated carboxylic acid content of 1 to 10% by weight and a melt flow rate of 1 to 600 g/10 min as determined at a temperature of 190 °C and under a load of 2,160 g and an ethylene-unsaturated carboxylic acid copolymer (copolymer (A-2)) having an unsaturated carboxylic acid content of 11 to 25% by weight and a melt flow rate of 1 to 600 g/10 min as determined at a temperature of 190 °C and under a load of 2,160 g.

7. A multi-layer structure according to claim 6, wherein the mixed copolymer composition is prepared in the blending ratio of 5 to 80% by weight for the ethylene-unsaturated carboxylic acid copolymer (copolymer (A-1)) and 95 to 20% by weight for the ethylene-unsaturated carboxylic acid copolymer (copolymer (A-2)).

8. A multi-layer structure according to claim 1, wherein the thermoplastic polymer in the layer (X) is an olefin-based polymer.

9. A multi-layer structure according to claim 1, wherein an adhesive layer and/or recycled resin layer is incorporated in between the layer (X) and the layer (Y).

10. A multi-layer structure according to any one of claims 1 to 9, wherein the thickness ratio of the total thickness of other layers to the layer (X) is within a range of 0.1 to 100.

11. A sheet or film which comprises the multi-layer structure according to any one of claims 1 to 10.

12. A sheet or film according to claim 11 whose coefficient of friction is 1.0 or less.

13. Use of a sheet or film according to claim 11 for application as packaging.

14. A bag or multi-layer container which is constructed of the multi-layer structure according to any one of claims 1 to 10.

15. A multi-layer container according to claim 14, wherein the container is produced by the blow molding process.

## Patentansprüche

1. Mehrschichtige Struktur, die wenigstens drei Schichten umfasst, umfassend:
eine Zwischenschicht (X), die ein Kaliumionomer aus einem Ethylen-ungesättigte Carbonsäure-Copolymer oder ein Gemisch des Kaliumionomers und eines anderen thermoplastischen Polymers als das Kaliumionomer umfasst, und
Oberflächenschichten, die aus einer Schicht (Y) bestehen, die ein Ethylencopolymer umfasst, das durch einen Metallocen-Katalysator hergestellt wurde, die einen spezifischen Oberflächenwiderstand von 1 x 10¹⁴ Ω oder mehr hat, wobei wenigstens eine der Oberflächenschichten eine 10% Ladungsabfallzeit von 20 s oder weniger bei +5000 V angelegter Spannung hat, wie sie in einer Atmosphäre mit einer Temperatur von 23°C und einer relativen Feuchtigkeit von 50% bestimmt wird, und
wobei keine Polyhydroxyverbindung zu der Zwischenschicht (X) zugesetzt ist.

2. Mehrschichtige Struktur gemäß Anspruch 1, wobei das Ethylencopolymer, das durch einen Metallocen-Katalysator produziert wurde, eine Dichte von 870 bis 970 kg/m³ hat.

3. Mehrschichtige Struktur gemäß Anspruch 1, wobei das Ethylencopolymer durch Copolymerisieren von Ethylen mit einem alpha-Olefin, das 3 oder mehr Kohlenstoffatome hat, in Gegenwart eines Katalysators, der aus einer Katalysatorkomponente, die eine Verbindung eines Übergangsmetalls der Gruppe IVB mit wenigstens einem oder mehreren Liganden einer Cyclopentadienylstruktur umfasst, und einer Organoaluminiumoxy-Verbindungs-Katalysatorkomponente formuliert wurde, hergestellt wird.

4. Mehrschichtige Struktur gemäß einem der Ansprüche 1 bis 3, wobei das Kaliumionomer ein Ionomer des Ethylen-ungesättigte Carbonsäure-Copolymers, dessen Gehalt an gesättigter Carbonsäure 10 bis 30 Gewichts-% ist, das einen Neutralisationsgrad von 60% oder mehr durch Kaliumion hat, umfasst.

5. Mehrschichtige Struktur gemäß Anspruch 4, wobei das Kaliumionomer gemischte Ionomere aus zwei oder mehr Ethylen-ungesättigte Carbonsäure-Polymeren, die im Gehalt an ungesättigter Carbonsäure variieren, ist, wobei der durchschnittliche Säuregehalt der Ethylen-ungesättigte Carbonsäure-Copolymere 10 bis 20 Gewichts-% beträgt und die Differenz im Säuregehalt zwischen dem höchsten und dem niedrigsten Säuregehalt 2 bis 20 Gewichts-% beträgt.

6. Mehrschichtige Struktur gemäß Anspruch 5, wobei das Kaliumionomer gemischte Ionomere mit einer gemischten Copolymerzusammensetzung ist, die einen durchschnittlichen Gehalt an ungesättigter Carbonsäure von 10 bis 30 Gewichts-% und eine durchschnittliche Schmelzflussrate von 1 bis 300 g/10 min, wie sie bei einer Temperatur von 190°C und unter einer Last von 2160 g bestimmt wird, hat, und (das Kaliumionomer) einen Neutralisationsgrad von 60% oder mehr hat, umfassend ein Ethylen-ungesättigte Carbonsäure-Copoylmer (Copolymer (A-1)), das einen Gehalt an ungesättigter Carbonsäure von 1 bis 10 Gewichts-% und eine Schmelzflussrate von 1 bis 600 g/10 min, wie sie bei einer Temperatur von 190°C und unter einer Last von 2160 g bestimmt wird, hat, und ein Ethylen-ungesättigte Carbonsäure-Copolymer (Copolymer (A-2)), das einen Gehalt an ungesättigter Carbonsäure von 11 bis 25 Gewichts-% und eine Schmelzflussrate von 1 bis 600 g/10 min, wie sie bei einer Temperatur von 190°C und unter einer Last von 2160 g bestimmt wird, hat.

7. Mehrschichtige Struktur gemäß Anspruch 6, wobei die gemischte Coplymerzusammensetzung in einem Mischungsverhältnis von 5 bis 80 Gewichts-% für das Ethylen-ungesättigte Carbonsäure-Copolymer (Copolymer (A-1)) und 95 bis 20 Gewichts-% für das Ethylen-ungesättigte Carbonsäure-Copolymer (Copolymer (A-2)) hergestellt ist.

8. Mehrschichtige Struktur gemäß Anspruch 1, wobei das thermoplastische Polymer in der Schicht (X) ein Olefinbasiertes Polymer ist.

9. Mehrschichtige Struktur gemäß Anspruch 1, wobei zwischen der Schicht (X) und der Schicht (Y) eine Klebstoffschicht und/oder eine Schicht aus recyceltem Harz eingearbeitet ist.

10. Mehrschichtige Struktur gemäß einem der Ansprüche 1 bis 9, wobei das Dickeverhältnis der Gesamtdicke von anderen Schichten zu der Schicht (X) in einem Bereich von 0,1 bis 100 liegt.

11. Folie oder Film, der die mehrschichtige Struktur gemäß einem der Ansprüche 1 bis 10 umfasst.

12. Folie oder Film gemäß Anspruch 11, deren/dessen Reibungskoeffizient 1,0 oder weniger ist.

13. Verwendung einer Folie oder eines Films gemäß Anspruch 11 zur Anwendung als Verpackung.

14. Beutel oder mehrschichtiger Behälter, der aus der mehrschichtigen Struktur gemäß einem der Ansprüche 1 bis 10 aufgebaut ist.

15. Mehrschichtiger Behälter gemäß Anspruch 14, wobei der Behälter durch ein Blasformverfahren hergestellt ist.

## Revendications

1. Structure multicouche comprenant au moins trois couches, y compris :
- une couche intermédiaire (X) comportant un ionomère potassique d'un copolymère d'éthylène et d'acide carboxylique insaturé, ou un mélange d'un tel ionomère potassique et d'un polymère thermoplastique autre que ce ionomère potassique ;
- et des couches de surface consistant chacune en une couche (Y) comprenant un copolymère d'éthylène produit à l'aide d'un catalyseur de type métallocène, présentant une résistivité surfacique d'au moins 1.10¹⁴ Ω, étant entendu que pour au moins l'une de ces couches de surface et pour une tension appliquée de +5000 V, le temps que met la charge à diminuer de 10 %, mesuré dans une atmosphère à 50 % d'humidité relative et à la température de 23 °C, est de 20 secondes ou moins ;
dans laquelle structure il n'y a pas de composé polyhydroxylé ajouté dans la couche intermédiaire (X).

2. Structure multicouche conforme à la revendication 1, dans laquelle le copolymère d'éthylène produit à l'aide d'un catalyseur de type métallocène présente une masse volumique de 870 à 970 kg/m³.

3. Structure multicouche conforme à la revendication 1, dans laquelle le copolymère d'éthylène est le produit d'une copolymérisation d'éthylène et d'une alpha-oléfine comportant 3 atomes de carbone ou plus, réalisée en présence d'un catalyseur formulé à partir d'un composant de catalyseur qui comprenait un composé d'un métal de transition du Groupe IVB comportant au moins un ou plusieurs ligands de structure de type cyclopentadiényle et d'un composant de catalyseur de type composé organo-oxy-aluminium.

4. Structure multicouche conforme à l'une des revendications 1 à 3, dans laquelle l'ionomère potassique comprend un ionomère d'un copolymère d'éthylène et d'acide carboxylique insaturé dont la teneur en acide carboxylique insaturé vaut de 10 à 30 % en poids et qui est neutralisé par des ions de potassium à un degré d'au moins 60 %.

5. Structure multicouche conforme à la revendication 4, dans laquelle l'ionomère potassique est un mélange d'ionomères d'au moins deux polymères d'éthylène et d'acide carboxylique insaturé dont les teneurs en acide carboxylique insaturé varient, étant entendu que la teneur moyenne en acide de ces copolymères d'éthylène et d'acide carboxylique insaturé vaut de 10 à 20 % en poids et que la différence de teneur en acide entre les teneurs en acide la plus faible et la plus forte vaut de 2 à 20 % en poids.

6. Structure multicouche conforme à la revendication 5, dans laquelle l'ionomère potassique est un mélange d'ionomères d'une composition mixte de copolymères dont la teneur moyenne en acide carboxylique insaturé vaut de 10 à 30 % en poids et dont l'indice moyen de fluidité à chaud, déterminé à la température de 190 °C sous une charge de 2160 g, vaut de 1 à 300 g/10 min, et qui est neutralisée à un degré d'au moins 60 %, laquelle composition comprend un copolymère d'éthylène et d'acide carboxylique insaturé (copolymère "A-1") dont la teneur en acide carboxylique insaturé vaut de 1 à 10 % en poids et dont l'indice de fluidité à chaud, déterminé à la température de 190 °C sous une charge de 2160 g, vaut de 1 à 600 g/10 min, et un copolymère d'éthylène et d'acide carboxylique insaturé (copolymère "A-2") dont la teneur en acide carboxylique insaturé vaut de 11 à 25 % en poids et dont l'indice de fluidité à chaud, déterminé à la température de 190 °C sous une charge de 2160 g, vaut de 1 à 600 g/10 min.

7. Structure multicouche conforme à la revendication 6, pour laquelle on a préparé la composition mixte de copolymères en respectant les proportions de mélange suivantes : de 5 à 80 % en poids de copolymère "A-1" d'éthylène et d'acide carboxylique insaturé et de 95 à 20 % en poids de copolymère "A-2" d'éthylène et d'acide carboxylique insaturé.

8. Structure multicouche conforme à la revendication 1, dans laquelle le polymère thermoplastique de la couche X est un polymère à base d'oléfine(s).

9. Structure multicouche conforme à la revendication 1, dans laquelle une couche d'adhésif et/ou une couche de résine recyclée est ou sont incorporée(s) entre la couche X et la couche Y.

10. Structure multicouche conforme à l'une des revendications 1 à 9, dans laquelle le rapport de l'épaisseur totale des autres couches à l'épaisseur de la couche X se trouve dans l'intervalle allant de 0,1 à 100.

11. Feuille ou film comprenant une structure multicouche conforme à l'une des revendications 1 à 10.

12. Feuille ou film conforme à la revendication 11, dont le coefficient de frottement est inférieur ou égal à 1,0.

13. Utilisation d'une feuille ou d'un film conforme à la revendication 11, pour une application en tant qu'emballage.

14. Sac ou contenant multicouche, qui est formé d'une structure multicouche conforme à l'une des revendications 1 à 10.

15. Contenant multicouche conforme à la revendication 14, lequel contenant a été fabriqué suivant un procédé de moulage par soufflage.
